# EUROPÄISCHE PATENTSCHRIFT

(11) **EP 1 449 718 B1**
(45) Veröffentlichungstag und Bekanntmachung des Hinweises auf die Patenterteilung: **16.07.2008**
(21) Anmeldenummer: 04000811.2
(22) Anmeldetag: 16.01.2004
(51) Int. Cl.: B60Q 3/02

(54) **Leseleuchte für Flugzeugkabinen**
Reading light for aircraft cabin
Lampe de lecture pour cabine d'avion

(30) Priorität: 20.02.2003 DE 10307147
(43) Veröffentlichungstag der Anmeldung: 25.08.2004
(73) Patentinhaber: Airbus Deutschland GmbH, 21129 Hamburg (DE)
(72) Erfinder: Kohlmeier-Beckmann, Carsten, 21614 Buxtehude (DE); Heym, Detlef, 28832 Achim (DE)
(74) Vertreter: Hansmann, Dierk

(56) Entgegenhaltungen:
- EP-A2- 0 847 896
- EP-A2- 0 847 897
- WO-A-03/027990
- DE-U1- 29 919 032
- FR-A3- 2 815 696

## Beschreibung

Die Erfindung betrifft eine Leseleuchte für Flugzeugkabinen über einem Passagiersitz mit mindestens einer Lichtquelle als Kleinhalogen- oder eine LED-Leuchte.

In modernen Flugzeugkabinen sind über jedem Passagiersitz Leseleuchten installiert, die eine individuell zuschaltbare Beleuchtung für den zugeordneten Sitzbereich bereitstellen. Typischerweise werden Kleinhalogen- oder heute auch LED-Leuchten verwendet, die in Gruppen von zwei bis fünf Leuchten angeordnet sind.

Aufgrund der geometrischen Verhältnisse und der Flexibilität der Bestuhlung (Layout) ist eine Justierung dieser Leuchten in einem relativ weiten Bereich erforderlich. Die Justierbarkeit benötigt viel Einbauvolumen, da wegen des erwünschten kleinen Lichtaustritts die Schwenkachsen nicht im geometrischen Schwerpunkt, sondern sehr nahe an der vorderseitigen Begrenzung, d.h. im allgemeinen nahe an einer Lichtscheibe liegen müssen.

Eine individuelle Einstellung der Leseleuchte durch einen Passagier ist zwar wünschenswert, aber häufig wegen des konstruktiven Designs des sogenannten Versorgungskanals, in dem die Leuchten installiert sind, oder wegen der Unerreichbarkeit der Leuchten nicht realisierbar.

Die elektrische Versorgung der Leuchten erfolgt häufig mittels Vorschaltgeräten, die einerseits die elektrische Energie bereitstellen und aufbereiten sowie andererseits auch eine Verbindung zum Datenbussystem des Flugzeuges herstellen, um die Leseleuchten schalten und überwachen zu können. Die Vorschaltgeräte werden heute auch zur Ansteuerung anderer Komponenten im Versorgungskanal genutzt, z. B. für die Lautsprecher, Nichtraucher- und Anschnallzeichen. Die elektrische Verbindung zwischen den Vorschaltgeräten und den Leseleuchten erfolgt wegen der beweglichen Lagerung der Leseleuchten über einzelne Kabelbündel.

Nach der DE 299 19 032 U1 ist eine gattungsgemäße Innenleuchte für Kraftfahrzeuge bekannt, wobei im Strahlengang des Leuchtmittels ein Umlenkprisma angeordnet ist. Hierbei ist eine Reflexionsfläche des Umlenkprismas zur Bündelung des von der Leuchtdiode als Leuchtmittel abgeschalteten Leuchtbündels ausgebildet. Der Winkel der auf der Reflexionsfläche des Umlenkprismas auftreffenden Lichtstrahlen des Leuchtbündels ist so gewählt, daß diese an der Reflexionsfläche einer Totalreflexion unterliegen.

Der Erfindung liegt nun die Aufgabe zugrunde, eine Leseleuchte für Flugzeugkabinen zu schaffen, die diesen Kompromiß aus gleichmäßiger Ausleuchtung, Einbauhöhe und Verkabelungsaufwand verbessert und vorzugsweise auch eine komfortable Justierung der Leuchte ermöglicht.

Die erfindungsgemäße Lösung der Aufgabe erfolgt durch den Einbau einer projizierenden Leseleuchte mit horizontal liegender optischer Achse, deren ausgesandte Lichtstrahlen über ein optisches Umlenkmittel in den Sitzbereich des zugehörigen Passagiersitzes umgelenkt werden, wobei im optischen Strahlengang zwischen Lichtquelle und Umlenkmittel ein Linsensystem bestehend aus einer Fokussierlinse und einer Sammellinse mit einer zwischen Fokussierlinse und Sammellinse angeordneten Blende.

Ausgestaltungen der Erfindung sind in den Unteransprüchen 2 bis 19 beschrieben.

Vorteile der erfindungsgemäßen Leuchte liegen in ihrer geringen Bauhöhe und ihrem geringem Volumenbedarf. Ein weiterer Vorteil besteht in der individuellen Einstellbarkeit der Leuchte durch ihren Nutzer. So ist gemäß einer erfindungsgemäßen Weiterbildung eine motorische individuelle Einstellbarkeit eines als optisches Umlenkmittel dienenden Spiegels mittels elektischer Antriebe in zwei Achsen vorgesehen. Diese Einstellbarkeit kann mittels einer beispielsweise in der Armlehne eines Passagiersitzes angeordneten Fernsteuerungseinrichtung verwirklicht werden, wobei die Antriebe Steuersignale "rechts-links" und "auf-ab" erhalten und somit eine Verstellung des Spiegels in zwei Achsen ermöglichen. Weiterhin kann eine automatische Justierung einer Leseleuchte in Abhängigkeit von einer voreingestellten Position des Passagiersitzes erfolgen. Auch kann hier über eine Korrelationstabelle, die eine Beziehung zwischen Sitzposition eines elektrisch verstellbaren Sitzes und der optimalen Leseleuchtenposition herstellt, eine automatische Einstellung der Leseleuchte erfolgen.

In der Zeichnung ist ein Ausführungsbeispiel nach der Erfindung dargestellt, und zwar zeigt:
- Fig. 1: eine projizierende Leseleuchte mit horizontal im Flugzeug liegender optischer Achse,
- Fig. 2: eine Leseleuchte mit gegenüber der Leseleuchte aus Fig. 1 verändertem Gehäuse und Aufbau,
- Fig. 3: eine Dreipunktlagerung eines als optisches Umlenkmittel wirkenden Spiegels,
- Fig. 4: Bauteile einer kardanischen Aufhängung für einen Spiegel,
- Fig. 5: eine Explosionsdarstellung einer Leseleuchte,
- Fig. 6: eine in einem Flugzeug-Versorgungskanal angeordnete Leseleuchte, und
- Fig. 7: ein Gehäuse mit drei Lichtquellen und Spiegeln.

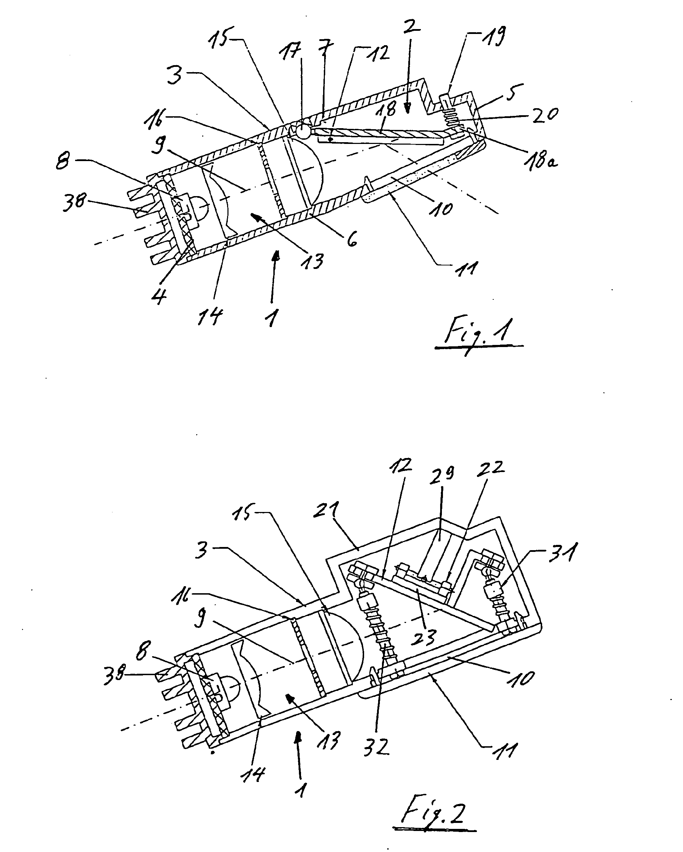

In Fig. 1 ist ein langgestrecktes Gehäuse 3 dargestellt, welches vorzugsweise einen rechteckigen oder quaderförmigen Querschnitt und somit zwei einander gegenüberliegende Stirnseiten 4 und 5 sowie zwei Längswandungen 6 und 7 aufweist. Im Bereich der mit 4 bezeichneten Stirnseite ist eine Lichtquelle 8 angeordnet, deren optische Achse 9 mit der Gehäuseachse fluchtet. Im Bereich der anderen Stirnseite 5 befindet sich in der Längswandung 6 des Gehäuses 3 eine Lichtaustrittsöffnung 10, die durch eine Lichtscheibe 11 abgedeckt ist, während im Bereich der Lichtaustrittsöffnung 10 ein Spiegel 12 als optisches Umlenkmittel 2 im optischen Strahlengang 9 innerhalb des Gehäuses 3 angeordnet ist. Der Spiegel 12 lenkt die von der Lichtquelle 8 - mit im Flugzeug horizontal liegender optischer Achse 9 - ausgesandten Lichtstrahlen in den Sitzbereich eines zugehörigen Passagiersitzes.

Im optischen Strahlengang 9 zwischen Lichtquelle 8 und Spiegel 12 ist ein Linsensystem 13 angeordnet, welches aus einer Fokusierlinse 14 und einer Sammellinse 15 besteht, zwischen denen sich eine Blende 16 befindet. Anstelle des Spiegels 12 kann auch ein Winkelprisma als optisches Umlenkmittel 2 vorgesehen sein, wobei jedes verwendete optische Umlenkmittel 2 zur Justierung des Strahlenganges 9 schwenkbar angeordnet ist.

Aus Fig. 1 ist ersichtlich, dass der Spiegel 12 mit einer seiner Stirnseiten an derjenigen Längswandung 7 des Gehäuses 3, die der Lichtaustrittsöffnung 10 gegenüberliegt, um eine Schwenkachse 17 schwenbar befestigt ist. Verwirklicht wird dieses durch eine den Spiegel 12 tragende Platte 18, die mit einer Stirnseite an der Schwenkachse 17 drehbeweglich befestigt ist. Die gegenüberliegende Stirnseite der Platte 18 ist angewinkelt, wobei an der angewinkelten Stirnseite 18a ein Ende einer federgestützten Verstellschraube 19 befestigt ist, deren anderes Ende in eine Gewindebohrung in einer Gehäusewandung 7 eingreift und diese durchsetzt. Zwischen der angewinkelten Stirnseite 18a und der Gehäusewandung 7 ist eine Druckfeder 20 angeordnet.

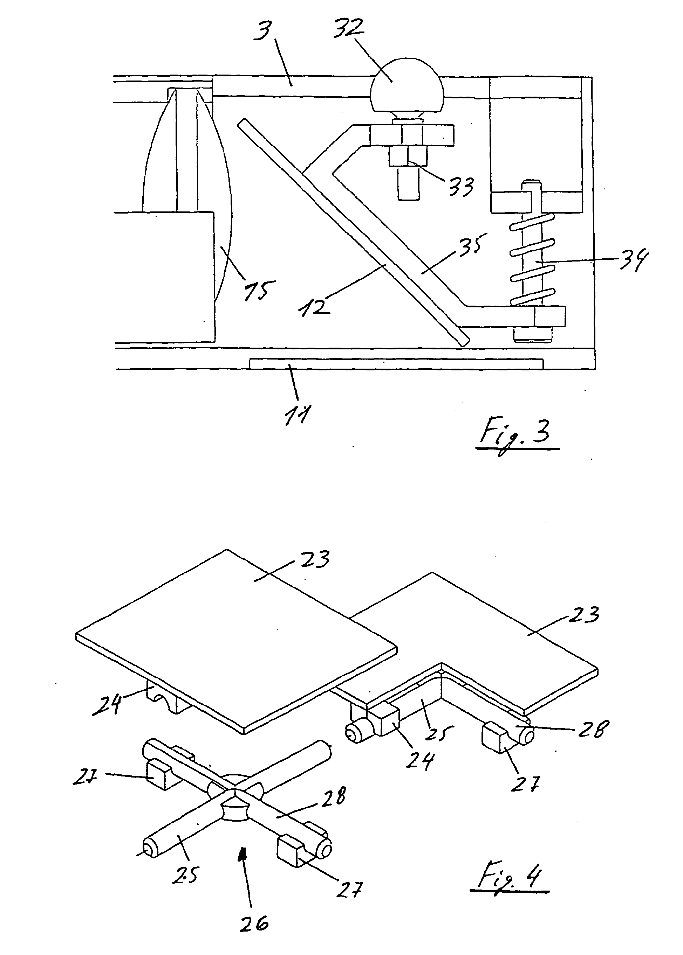

Die in Fig. 2 dargestellte Leseleuchte 1 unterscheidet sich von derjenigen aus Fig. 1 durch einen vergrößerten Gehäuseteil 21 zur Aufnahme eines Spiegels 12, der mittels einer kardanischen Aufhängung 22 an einer Wandung des vergrößerten Gehäuseteiles 21 befestigt ist. Wie aus Fig. 4 zu entnehmen ist, besteht die kardanische Aufhängung 22 aus einer den Spiegel 12 aufnehmenden Platte 23 mit zwei Lagern 24, die mit einer Achse 25 eines Kardanachsenkreuzes 26 zusammenwirken. Der Zusammenbau von Platte 23 und Kardanachsenkreuz 26 ist aus der rechten Teildarstellung von Fig. 4 ersichtlich. Die Lager 27 der andere Achse 28 des Kardandachsenkreuzes 26 sind in einem Befestigungselement 29 gelagert, welches - wie Fig. 2 zeigt - das Kardanachsenkreuz 26 mit einer Wandung des vergrößerten Gehäusteiles 21 mechanisch verbindet. Innerhalb dieses Gehäuseteiles 21 ist der Spiegel 12 durch zwei zusätzliche druckfedergestützte Verstellschrauben 30 bzw. 31 individuell einstellbar gelagert.

Fig. 3 zeigt einen Ausschnitt einer Leseleuchte mit einer Dreipunktlagerung des als optisches Umlenkmittel 2 dienenden Spiegels 12. Durch diese Dreipunktlagerung ist der Spiegel 12 mit einem zweidimensionalen Drehlager in Form eines Kugelkopfes 32 und mit zwei einstellbaren Lagern in Form von Justierschrauben 33 und 34 innerhalb des Gehäuses 3 befestigt. Beide Justierschrauben 33 und 34 sind über einen Befestigungshebel 35, an dem der Spiegel 12 mechanisch befestigt ist, miteinander verbunden, wobei Justierschraube 33 mit dem in einer Wandung des Gehäuses 3 gelagerten Kugelkopf 32 mechanisch verbunden ist und die Justierschraube 33 druckfedergestützt an einer Wandung des Gehäuses 3 befestigt ist.

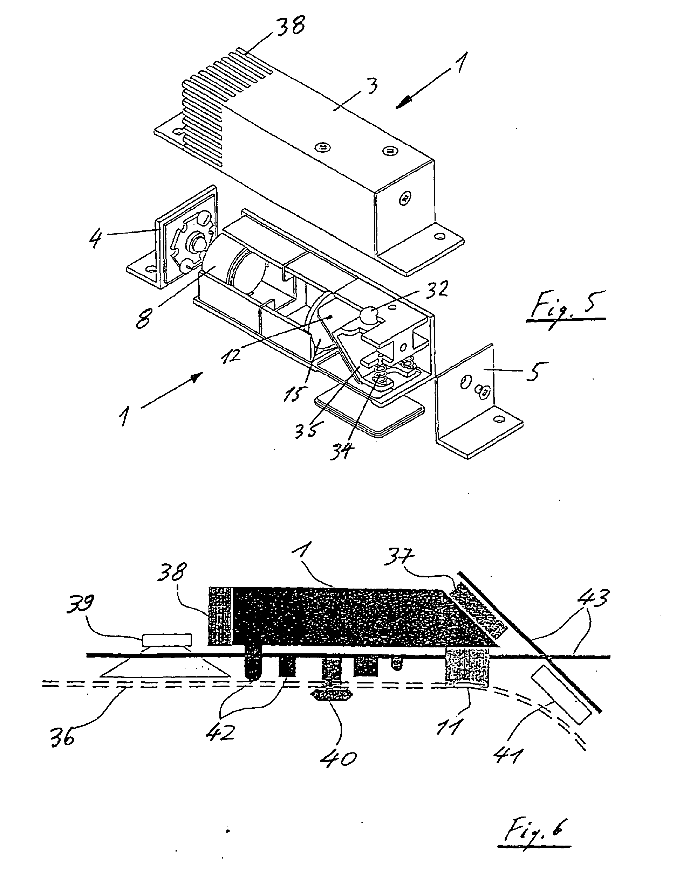

Aus Fig. 5 ist eine Leseleuchte 1 im zusammengebauten Zustand zum einen mit geschlossenem Gehäuse 3 und zum anderen ohne Gehäuse ersichtlich, wobei alle Bauelemente mit den bisherig verwendeten Bezugszeichen bezeichnet sind.

Die Darstellung gemäß Fig. 6 zeigt eine Leseleuchte 1, die in einem Versorgungskanal eines Flugzeuges eingebaut ist, dessen Frontblende mit 36 bezeichnet ist. Neben der Leseleuchte 1 mit Lichtscheibe 11, Spiegelantrieb 37 und Kühlkörper 38 sind im Versorgungskanal ein Lautsprecher 39, eine Stewardruftaste und -anzeige 40, eine Nichtraucheranzeige 41 und weitere elektrische Bauteile 42 eingebaut. Alle Bauelemente sind auf sogenannten Befestigungs-Platinen 41 mechanisch befestigt, die im Versorgungskanal installiert sind. Hierbei kann vorteilhafterweise der geometrische Aufbau der gesamten elektischen Komponenten der Leseleuchte 1 in Form eines Blockes derartig ausgebildet sein, dass bei Entfall der Verkabelung zwischen Leseleuchte 1 und Vorschaltgerät eine Komplettintegration aller elektrischer und elektronischer Baugruppen zu einer Einheit erfolgt.

Anstelle der Lichtscheibe 11 zur Abdeckung der in der Längswandung 6 des Gehäuses 3 angeordneten Lichtaustrittsöffnung 10 kann diese Lichtaustrittsöffnung 10 auch durch eine Sammellinse abgedeckt sein. Weiterhin kann als optisches Umlenkmittel 2 ein nicht justierbarer Spiegel 12 verwendet werden, der auf einem Spiegelträger fest montiert ist. Mit diesem Spiegelträger können vorteilhafterweise feste Einstellungen des optischen Strahlenganges 9 vorgegeben werden.

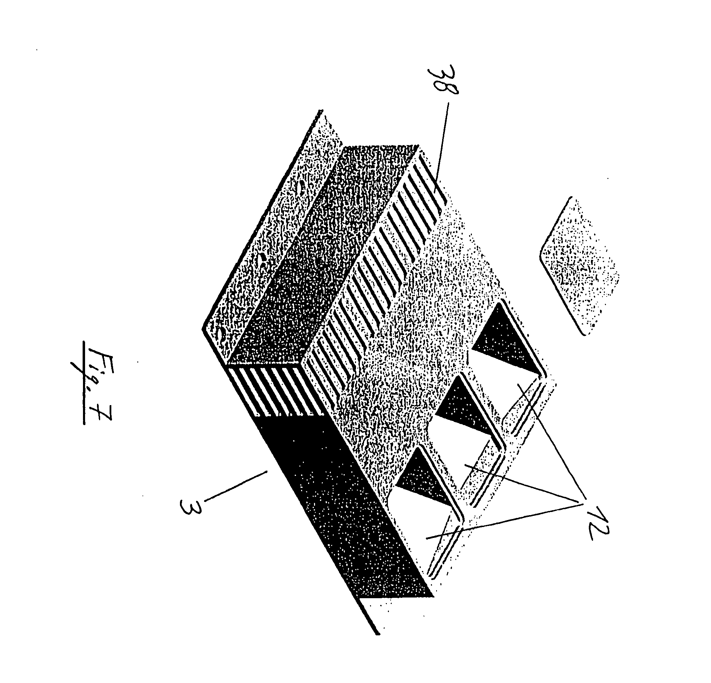

Gemäß Fig. 7 weist ein Gehäuse 3 beispielsweise insgeamt drei Spiegel 12 auf, die zweckmäßigerweise justierbar ausgeführt sind und denen jeweils eine zeichnerisch nicht dargestellte Lichtquelle zugeordnet ist. Durch diese Anordnung von drei Leseleuchten in einem Gehäuse 3 wird vorteilhafterweise eine äußerst kompakte Baueinheit erzielt.

### Bezugszeichenliste

- 1: projizierende Leseleuchte
- 2: optisches Umlenkmittel
- 3: Gehäuse
- 4: eine Stirnseite des Gehäuses 3
- 5: andere Stirnseite des Gehäuses 3
- 6: eine Längswandung des Gehäuses 3
- 7: andere Längswandung des Gehäuses 3
- 8: Lichtquelle
- 9: optische Achse der Lichtquelle 8

- 10: Lichtaustrittsöffnung
- 11: Lichtscheibe
- 12: Spiegel
- 13: Linsensystem
- 14: Fokusierlinse des Linsensystems 13
- 15: Sammellinse des Linsensystems 13
- 16: Blende des Linsensystems 13
- 17: Schwenkachse des Spiegels 12
- 18: Platte für Spiegel 12
- 18a: angewinkelte Stirnseite der Platte 18
- 19: Verstellschraube

- 20: Druckfeder
- 21: vergrößertes Gehäuseteil
- 22: kardanische Aufhängung
- 23: Platte für Spiegel 12
- 24: Lager für Kardanachsenkreuz 26
- 25: eine Achse des Kardanachsenkreuzes 26
- 26: Kardanachsenkreuz
- 27: Lager für Kardanachsenkreuz 26
- 28: andere Achse des Kardanachsenkreuzes 26
- 29: Befestigungselement

- 30: druckfedergestützte Verstellschrauben
- 31: druckfedergestützte Verstellschrauben
- 32: Kugelkopf / dreidimensionales Lager
- 33: Justierschrauben
- 34: Justierschrauben
- 35: Befestigungshebel für Spiegel 12
- 36: Frontblende des Versorgungskanals
- 37: Spiegelantrieb
- 38: Kühlkörper
- 39: Lautsprecher

- 40: Stewardruftaste und -anzeige
- 41: Nichtraucheranzeige
- 42: elektrische Bauteile
- 43: Befestigungs-Platinen

## Patentansprüche

1. Leseleuchte für Flugzeugkabinen über einem Passagiersitz mit mindestens einer Lichtquelle (8) als Kleinhalogen- oder eine LED-Leuchte, und mit einer horizontal liegenden optischen Achse, deren ausgesandte Lichtstrahlen über ein optisches Umlenkmittel (2) in den Sitzbereich des zugehörigen Passagiersitzes umgelenkt werden, **gekennzeichnet durch** den Einbau einer projizierenden Leseleuchte (1) bei der im optischen Strahlengang zwischen Lichtquelle (8) und Umlenkmittel (2) ein Linsensystem bestehend aus einer Fokussierlinse (14) und einer Sammellinse (15) angeordnet ist, wobei zwischen Fokussierlinse (14) und Sammellinse (15) eine Blende (16) angeordnet ist.

2. Leseleuchte nach Anspruch 1, **dadurch gekennzeichnet, daß** ein langgestrecktes Gehäuse (3) mit zwei einander gegenüberliegenden Stirnseiten (4 bzw. 5) vorgesehen ist, daß im Bereich einer der beiden Stirnseiten (4) eine Lichtquelle (8) angeordnet ist, deren optische Achse (9) mit der Gehäuseachse fluchtet, daß im Bereich der anderen Stirnseite (5) eine Lichtaustrittsöffnung (10) in einer Längswandung (6) des Gehäuses (3) vorgesehen ist, und daß im Bereich der Lichtaustrittsöffnung (10) das optische Umlenkmittel (2) innerhalb des Gehäuses (3) angeordnet ist.

3. Leseleuchte nach Anspruch 2, **gekennzeichnet durch** ein langgestrecktes Gehäuse (3) mit rechteckigem oder quaderförmigem Querschnitt.

4. Leseleuchte nach Anspruch 2, **dadurch gekennzeichnet, daß** die Lichtaustrittsöffnung (19) durch eine Lichtscheibe (11) abgedeckt ist.

5. Leseleuchte nach Anspruch 1 oder 2, **dadurch gekennzeichnet, daß** als optisches Umlenkmittel (2) ein Spiegel (12) vorgesehen ist.

6. Leseleuchte nach Anspruch 1 oder 2, **dadurch gekennzeichnet, daß** als optisches Umlenkmittel (2) ein Winkelprisma vorgesehen ist.

7. Leseleuchte nach einem der Ansprüche 1, 2 oder 5, **gekennzeichnet durch** ein verschwenkbar angeordnetes optisches Umlenkmittel (2) zur Justierung des Strahlenganges.

8. Leseleuchte nach Anspruch 5, **dadurch gekennzeichnet, daß** der als optisches Umlenkmittel (2) dienende Spiegel (12) mit einer seiner Stirnseiten an derjenigen Längswandung (7) des Gehäuses (3), die der Lichtaustrittsöffnung (10) gegenüberliegt, um eine Schwenkachse (17) schwenkbar befestigt ist.

9. Leseleuchte nach Anspruch 8, **dadurch gekennzeichnet, daß** an der Schwenkachse (17) eine Stirnseite einer den Spiegel (12) tragenden Platte (18) befestigt ist, deren gegenüberliegende Stirnseite (18a) angewinkelt ist, daß an dem angewinkelten Stirnseite (18a) ein Ende einer federgestützten Verstellschraube (19) befestigt ist, deren anderes Ende in eine Gewindebohrung in einer Gehäusewandung (7) eingreift und diese durchsetzt, und daß zwischen der angewinkelten Stirnseite (18a) und der Gehäusewandung (7) eine Druckfeder (20) angeordnet ist.

10. Leseleuchte nach Anspruch 5, **dadurch gekennzeichnet, daß** der als optisches Umlenkmittel (2) dienende Spiegel (12) durch eine Dreipunktlagerung mit einem zweidimensionalem Drehlager in Form eines Kugelkopfes (32) und mit zwei einstellbaren Lagern in Form von Justierschrauben (33 bzw. 34) innerhalb des Gehäuses (3/21) befestigt ist.

11. Leseleuchte nach Anspruch 5, **dadurch gekennzeichnet, daß** der als optisches Umlenkmittel (2) dienende Spiegel (12) durch eine kardanische Aufhängung (22) und Friktionsbremse individuell einstellbar innerhalb des Gehäuses (3/21) gelagert ist.

12. Leseleuchte nach Anspruch 11, **dadurch gekennzeichnet, daß** die kardanische Aufhängung (22) aus einer den Spiegel (12) aufnehmenden Platte (23) mit zwei Lagern (24), einem Kardanachsenkreuz (26) und einem Befestigungselement (29), welches das Kardanachsenkreuz (26) mit einer Wandung des Gehäuses (3) mechanisch verbindet, besteht.

13. Leseleuchte nach Anspruch 11 oder 12, **dadurch gekennzeichnet, daß** der Spiegel (12) durch zwei druckfedergestützte Verstellschrauben (30 bzw. 31) justierbar ist.

14. Leseleuchte nach einem der Ansprüche 5 oder 8 bis 13, **gekennzeichnet durch** eine motorische individuelle Einstellbarkeit des Spiegels (12) mittels elektrischer Antriebe in zwei Achsen.

15. Leseleuchte nach Anspruch 14, **gekennzeichnet durch** eine Einstellbarkeit des Spiegels (12) mittels einer in der Armlehne eines Passagiersitzes angeordneten Fernsteuerungseinrichtung.

16. Leseleuchte nach Anspruch 14 oder 15, **dadurch gekennzeichnet, daß** eine automatische Justierung der Leseleuchte (1) in Abhängigkeit von der voreingestellten Position des Passagiersitzes erfolgt.

17. Leseleuchte nach einem der Ansprüche 1 bis 16, **gekennzeichnet durch** einen geometrischen Aufbau der gesamten elektrischen Komponenten der Leseleuchte (1) in Form eines derartig ausgebildeten Blockes, daß bei Entfall der Verkabelung zwischen Leseleuchte (1) und Vorschaltgerät eine Komplettintegration aller elektrischer und elektronischer Baugruppen zu einer Einheit erfolgt.

18. Leseleuchte nach Anspruch 2, **dadurch gekennzeichnet, daß** die in der Längswandung (6) des Gehäuses (3) angeordnete Lichtaustrittsöffnung (10) durch eine Sammellinse abgedeckt ist.

19. Leseleuchte nach Anspruch 1 oder 2, **dadurch gekennzeichnet, daß** als optisches Umlenkmittel (2) ein nicht justierbarer Spiegel (12) vorgesehen ist, der auf einem Spiegelträger fest montiert ist und mit dem eine feste Einstellung des optischen Strahlenganges (9) vorgegeben ist.

## Claims

1. Reading light for aircraft cabins above a passenger seat with at least one light source (8) such as a small halogen or an LED light, and with a horizontally disposed optical axis, the emitted light beams of which are deflected via an optical deflection means (2) into the seating area of the associated passenger seat, **characterised by** the installation of a projecting reading light, in which a lens system consisting of a focussing lens (14) and a converging lens (15) is disposed in the optical light path between the light source (8) and the deflection means (2), wherein a diaphragm (16) is disposed between the focussing lens (14) and the converging lens (15).

2. Reading light according to Claim 1, **characterised in that** an elongate housing (3) with two mutually opposite front sides (4 and 5) is provided, that a light source (8) is disposed in the area of one of the two front sides (4), the optical axis (9) of which light source is aligned with the housing axis, that a light exit opening (10) is provided in a longitudinal wall (6) of the housing (3) in the area of the other front side (5), and that the optical deflection means (2) is disposed inside the housing (3) in the area of the light exit opening (10).

3. Reading light according to Claim 2, **characterised by** an elongate housing (3) with a rectangular or cuboid cross section.

4. Reading light according to Claim 2, **characterised in that** the light exit opening (19) is covered by a light cover (11).

5. Reading light according to Claim 1 or 2, **characterised in that** a mirror (12) is provided as the optical deflection means (2).

6. Reading light according to Claim 1 or 2, **characterised in that** a rectangular prism is provided as the optical deflection means (2).

7. Reading light according to any one of Claims 1, 2 or 5, **characterised by** a pivotably disposed optical deflection means (2) for adjusting the light path.

8. Reading light according to Claim 5, **characterised in that** the mirror (12) serving as the optical deflection means (2) is fastened by one of its front sides to the longitudinal wall (7) of the housing (3) which lies opposite the light exit opening (10) so as to be pivotable about a pivot pin (17).

9. Reading light according to Claim 8, **characterised in that** a front side of a plate (18) bearing the mirror (12) is fastened to the pivot pin (17), the opposite front side (18a) of which plate is angled, that one end of a spring-supported adjusting screw (19) is fastened to the angled front side (18a), the other end of which engages in a threaded hole in a housing wall (7) and passes through this, and that a compression spring (20) is disposed between the angled front side (18a) and the housing wall (7) .

10. Reading light according to Claim 5, **characterised in that** the mirror (12) serving as the optical deflection means (2) is fastened inside the housing (3/21) by means of a three-point mounting with a two-dimensional pivot bearing in the form of a spherical head (32) and with two adjustable bearings in the form of adjusting screws (33 and 34).

11. Reading light according to Claim 5, **characterised in that** the mirror (12) serving as the optical deflection means (2) is mounted so as to be individually adjustable inside the housing (3/21) by means of a cardanic suspension (22) and a friction brake.

12. Reading light according to Claim 11, **characterised in that** the cardanic suspension (22) consists of a plate (23), holding the mirror (12), with two bearings (24), a Cardan axis cross (26) and a fastening element (29) which mechanically connects the Cardan axis cross (26) to a wall of the housing (3).

13. Reading light according to Claim 11 or 12, **characterised in that** the mirror (12) can be adjusted by means of two compression spring-supported adjusting screws (30 and 31) .

14. Reading light according to any one of Claims 5 or 8 to 13, **characterised by** individual, motor-driven adjustability of the mirror (12) along two axes by means of electric drives.

15. Reading light according to Claim 14, **characterised by** adjustability of the mirror (12) by means of a remote control device disposed in the armrest of a passenger seat.

16. Reading light according to Claim 14 or 15, **characterised in that** the reading light (1) is automatically adjusted in accordance with the preset position of the passenger seat.

17. Reading light according to any one of Claims 1 to 16, **characterised by** a geometric structure of all the electrical components of the reading light (1) in the form of a block which is formed such that, with the absence of cabling between the reading light (1) and the ballast, all the electrical and electronic modules can be completely integrated into a unit.

18. Reading light according to Claim 2, **characterised in that** the light exit opening (10) disposed in the longitudinal wall (6) of the housing (3) is covered by a converging lens.

19. Reading light according to Claim 1 or 2, **characterised in that** a non-adjustable mirror (12) is provided as the optical deflection means (2), which mirror is firmly mounted on a mirror carrier and with which a fixed setting of the optical light path (9) is predetermined.

## Revendications

1. Lampe de lecture pour cabine d'avion, disposée au-dessus d'un siège de passager et comprenant au moins une source de lumière (8) sous la forme d'une petite lampe à halogène ou à diode luminescente dont l'axe optique est horizontal et qui émet des rayons lumineux qu'un moyen optique de déviation (2) renvoie dans la zone d'assise du siège de passager concerné, la lampe étant **caractérisée en ce qu'**il s'agit d'une lampe de projection (1) avec, disposé sur le parcours des rayons lumineux entre la source de lumière (8) et les moyens de déviation (2), un système de lentilles composé d'une lentille de focalisation (14) et d'une lentille de collecte (15), entre lesquelles se trouve un diaphragme (16).

2. Lampe de lecture selon la revendication 1, **caractérisée en ce qu'**il est prévu un boîtier (3) allongé qui présente deux faces frontales opposées (4 et 5) dans l'une desquelles est disposée une source de lumière (8) dont l'axe optique (9) coïncide avec l'axe de boîtier tandis que dans la zone de l'autre face frontale (5) est prévue une ouverture de sortie de lumière (10) dans une paroi longitudinale (6) du boîtier (3), le moyen de déviation (2) étant disposé à l'intérieur du boîtier (3) dans la zone de l'ouverture de sortie de lumière (10).

3. Lampe de lecture selon la revendication 2, **caractérisée en ce que** le boîtier (3) allongé a une section transversale de forme rectangulaire ou carrée.

4. Lampe de lecture selon la revendication 2, **caractérisée en ce que** l'ouverture de sortie de lumière (19) est recouverte par un disque transparent (11).

5. Lampe de lecture selon la revendication 1 ou 2, **caractérisée en ce qu'**il est prévu un miroir comme moyen optique de déviation (2).

6. Lampe de lecture selon la revendication 1 ou 2, **caractérisée en ce qu'**il est prévu un prisme comme moyen optique de déviation (2).

7. Lampe de lecture selon une des revendications 1, 2 ou 5, **caractérisée en ce qu'**elle comporte, pour ajuster le trajet du rayon, un moyen optique de déviation (2) qui peut basculer.

8. Lampe de lecture selon la revendication 5, **caractérisée en ce que** le miroir (12) servant de moyen optique de déviation (2) a une de ses faces frontales fixée, en pouvant basculer autour d'un axe de basculement (17), sur la paroi longitudinale (7) du boîtier (3) qui se trouve à l'opposé de l'ouverture de sortie de lumière (10).

9. Lampe de lecture selon la revendication 8, **caractérisée en ce que** sur l'axe de basculement (17) est fixée une face frontale d'une plaque (18) qui porte le miroir (12) et que la face frontale opposée (18a) est coudée avec, fixée sur une de ses extrémités, une vis de réglage (19) soutenue par un ressort, tandis que l'autre extrémité est engagée dans une paroi de boîtier (7) et la charge, un ressort de poussée (20) étant disposé entre la face frontale (18a) et la paroi de boîtier (2).

10. Lampe de lecture selon la revendication 3, **caractérisée en ce que** le miroir (12) qui sert de moyen optique de déviation (2) est fixé à l'intérieur du boîtier (3/21) par un palier de rotation bidimensionnel sous la forme d'une tête sphérique (32) et par deux paliers réglables sous la forme de vis d'ajustage (32 et 34).

11. Lampe de lecture selon la revendication 5, **caractérisée en ce que** le miroir (12) servant de moyen optique de déviation (2) est monté à l'intérieur du boîtier (3/21) par une suspension à la cardan (22) et par un frein à friction qui peuvent être réglés individuellement.

12. Lampe de lecture selon la revendication 11, **caractérisée en ce que** la suspension à la cardan (22) est composée d'une plaque (23) qui accueille le miroir (12) et qui porte deux paliers (24), d'une croix de cardan (26) et d'un élément de fixation (29) qui relie mécaniquement la croix de cardan (26) à une paroi de boîtier (3).

13. Lampe de lecture selon la revendication 11 ou 12, **caractérisée en ce que** le miroir (12) peut être ajusté au moyen de deux vis de réglage (30, 31) soutenues chacune par un ressort.

14. Lampe de lecture selon une des revendications 5 ou 8 à 13, **caractérisée en ce que** le réglage individuel motorisé du miroir (12) est assuré selon deux axes par des entraînement électriques.

15. Lampe de lecture selon la revendication 14, **caractérisée en ce que** le réglage du miroir (12) est assuré par un dispositif de commande à distance disposé dans un bras d'accoudoir du siège de passager.

16. Lampe de lecture selon la revendication 14 ou 15, **caractérisée en ce qu'**un ajustage automatique de la lampe de lecture (1) a lieu en fonction de la position préréglée du siège de passager.

17. Lampe de lecture selon une des revendications 1 à 16, **caractérisée en ce qu'**elle comporte un assemblage géométrique de tous les composants électriques de la lampe de lecture (1) sous la forme d'un bloc conçu de manière que dans le cas de défaillance du câblage reliant la lampe (1) et l'appareil de tête, il se produit l'intégration complète en une unité des groupes électriques et électroniques.

18. Lampe de lecture selon la revendication 2, **caractérisée en ce que** l'ouverture de sortie de lumière (10) disposée dans la paroi longitudinale (6) du boîtier (3) est recouverte par une lentille de convergence.

19. Lampe de lecture selon la revendication 1 ou 2, **caractérisée en ce qu'**il est prévu, comme moyen optique de déviation (2) un miroir (12) non ajustable, qui est monté fixement sur un support de miroir et qui prédéfinit un réglage fixe du trajet des rayons lumineux (9).
